# EUROPEAN PATENT APPLICATION

(11) **EP 4 596 326 A1**
(43) Date of publication of application: **06.08.2025**
(21) Application number: 23871000.8
(22) Date of filing: 28.09.2023
(51) Int. Cl.: B60R 11/00, G03B 21/58

(54) **CURTAIN ASSEMBLY, OPTICAL ASSEMBLY, PROJECTION SYSTEM, VEHICLE AND CONTROL METHOD**

(30) Priority: 30.09.2022 CN 202211216349
(71) Applicant: Shenzhen Yinwang Intelligent Technologies Co., Ltd., Shenzhen, Guangdong 518129 (CN)
(72) Inventor: JIA, Wanghuan, Shenzhen, Guangdong 518129 (CN); ZHU, Xin, Shenzhen, Guangdong 518129 (CN); ZHANG, Siliang, Shenzhen, Guangdong 518129 (CN)
(74) Representative: Gill Jennings & Every LLP
(86) International application number: PCT/CN2023/122448
(87) International publication number: WO 2024/067775

(57) **Abstract**

A projection screen assembly, an optical engine assembly, a projection system, a vehicle, and a control method are provided. The projection screen assembly (1) includes a first connection structure (16), a first driving mechanism (12), and a projection screen body (11). The projection screen assembly (1) is connected to a vehicle body sheet metal (111) in a vehicle ceiling (110) through the first connection structure (16). The projection screen body (11) is connected to the first driving mechanism (12), and a projection screen rolls up into or extends out of the vehicle ceiling through driving of the first driving mechanism (12). There is no need to dispose an additional structure such as a hook on an interior trim member or a vehicle body beam for the projection screen assembly and the optical engine assembly, and there is no need to make a great change to a manufacturing process of the vehicle body beam or the interior trim member. Only space used for disposing the projection screen assembly is reserved between the vehicle body sheet metal and the interior trim member, so that production costs are reduced and arrangement of the projection screen assembly is facilitated.

## Description

This application claims priority to Chinese Patent Application No. 202211216349.X, filed with the China National Intellectual Property Administration on September 30, 2022 and entitled "PROJECTION SCREEN ASSEMBLY, OPTICAL ENGINE ASSEMBLY, PROJECTION SYSTEM, VEHICLE, AND CONTROL METHOD", which is incorporated herein by reference in its entirety.

### TECHNICAL FIELD

This application relates to the field of vehicle technologies, and in particular, to a projection screen assembly, an optical engine assembly, a projection system, a vehicle, and a control method.

### BACKGROUND

More vehicles are equipped with cabin entertainment systems, for example, projection screens for passengers to watch videos. An existing projection screen is usually separately accommodated. The projection screen needs to be manually installed at a specific position on a vehicle during use, and needs to be removed and placed in a storage place like a trunk after use. The operation is complex. In addition, another object is usually placed in the storage place like the trunk. This is prone to damage the projection screen, affecting video watching effect.

### SUMMARY

This application aims to provide a projection screen assembly, an optical engine assembly, a projection system, a vehicle, and a control method, to resolve a problem that a use or accommodation operation of a projection screen in an existing vehicle is complex and the projection screen is prone to be damaged after being accommodated together with another object.

A first aspect of this application provides a projection screen assembly. The projection screen assembly is disposed in a vehicle ceiling, and the projection screen assembly includes:
a first connection structure, where the projection screen assembly is connected to a vehicle body sheet metal in the vehicle ceiling through the first connection structure;
a first driving mechanism; and
a projection screen body, where the projection screen body is connected to the first driving mechanism, and a projection screen rolls up into or extends out of the vehicle ceiling through driving of the first driving mechanism.

According to the projection screen assembly provided in this application, there is no need to dispose an additional structure such as a hook on an interior trim member or a vehicle body beam, and there is no need to make a great change to a manufacturing process of the vehicle body beam or the interior trim member. Only space used for disposing the projection screen assembly is reserved between the vehicle body sheet metal and the interior trim member, so that production costs are reduced and arrangement of the projection screen assembly is facilitated.

In a possible design, the projection screen assembly further includes a first housing, the first housing is disposed in the vehicle ceiling, the first housing is connected to the vehicle body sheet metal through the first connection structure, and the first driving mechanism is disposed in the first housing; and the first housing is provided with a first hole, and the projection screen body rolls up into or extends out of the first housing through the first hole.

The first housing can be fastened to the vehicle body sheet metal through fitting between a connection member, such as a bolt, a screw, or a rivet, and a connection hole, to facilitate connection between the projection screen assembly and the vehicle ceiling. In addition, protection on the first driving mechanism and the projection screen body can also be implemented through the first housing, to prevent the projection screen body from being damaged or polluted by an external object.

In a possible design, the projection screen assembly further includes a decorative plate, the decorative plate is connected to the bottom of the projection screen body, and the decorative plate is configured to seal the first hole in a state in which the projection screen body is accommodated in the first housing.

The decorative plate can prevent external impurities, liquids, and the like from entering the first housing and polluting the first driving mechanism and the projection screen body, and can also prevent an appearance from being affected by exposure of components such as the projection screen body. In addition, the decorative plate also has a specific weight, and may be used as a counterweight of the projection screen. When the projection screen body descends or the projection screen body is in normal use, the decorative plate can maintain stability of a descending machine of the projection screen body during use of the descending machine. This improves video watching experience.

In a possible design, the projection screen body further includes a retractable bracket, one end of the retractable bracket is disposed on the first housing, the other end of the retractable bracket is connected to the projection screen body, and the other end of the retractable bracket is accommodated in or extends out of the first housing as the projection screen body moves.

The retractable bracket can prevent the projection screen body from being twisted when the vehicle shakes. This can ensure stability of the projection screen body in an in-use state, and improve video watching experience. In addition, in a process of rolling or unrolling the projection screen body, the retractable bracket can also support the projection screen body through extending or shrinking in the entire process of rolling or unrolling the projection screen body. This ensures smooth and crease-free rolling or unrolling of the projection screen body.

In a possible design, the first housing is fastened to the vehicle body sheet metal through the first connection structure. In this way, fastening of the first housing can be facilitated, and reliability of connection between the first housing and the vehicle body sheet metal can be ensured.

In a possible design, the first connection structure is an adapter bracket. The adapter bracket can be used to facilitate installation of the projection screen assembly.

In a possible design, the first connection structure is a connection hole provided on the first housing. In this way, the first housing can be fastened to the vehicle body sheet metal through fitting between the connection member, such as a bolt, a screw, or a rivet, and the connection hole. This facilitates connection between the projection screen assembly and the vehicle ceiling.

In a possible design, the first driving mechanism includes a motor and a reel, and the motor is connected to the reel, and is configured to drive the reel to rotate; and one end of the projection screen body is connected to the reel. Rolling or unrolling of the projection screen body can be facilitated through cooperation between the motor and the reel.

In a possible design, the projection screen assembly is slidably connected to the vehicle body sheet metal along a longitudinal direction of a vehicle through the first connection structure. In this way, a position of the projection screen assembly can be adjusted forward and backward, so that the passenger can adjust the projection screen assembly to a proper position based on a requirement. This can better improve video watching experience.

In a possible design, the projection screen assembly includes a second housing, the first driving mechanism is disposed in the second housing, and the projection screen body rolls up into or extends out of the second housing; the first connection structure includes a sliding rail, a slider, and a second driving mechanism; the sliding rail is connected to the vehicle body sheet metal, the slider is connected to the second housing, and the second housing is slidably connected to the sliding rail through the slider; and the second driving mechanism is connected to the second housing, and is configured to drive the second housing to move along the sliding rail.

The second driving mechanism may be a motor, a cylinder, or the like. The second driving mechanism can provide a forward or backward acting force for the second housing, so that the second housing can implement relative sliding through cooperation between the sliding rail and the slider. This implements adjustment of the position of the projection screen assembly and is convenient to control.

A second aspect of this application further provides an optical engine assembly, including:
a second connection structure;
an optical engine body, where the optical engine body is disposed in a vehicle ceiling, and the optical engine body is connected to a vehicle body sheet metal in the vehicle ceiling through the second connection structure; and
a lens, where the lens is connected to the optical engine body, the lens extends out of the vehicle ceiling, and the lens is configured to project light onto the projection screen body in the projection screen assembly provided in the first aspect of this application.

According to the optical engine assembly provided in this application, the optical engine assembly is disposed inside the vehicle ceiling, only the lens protrudes from the ceiling, and a size of the lens is relatively small, so that the optical engine assembly, compared with an existing optical engine, can save large space in the vehicle. In addition, the lens is located at the vehicle ceiling, so that the lens may be located above a head of a passenger, and light emitted by the lens does not affect eyes of the passenger. In this way, the passenger can have relatively good video watching experience.

In a possible design, the lens is disposed at the bottom of the optical engine body along a thickness direction of the vehicle ceiling. For a vehicle having a glass roof and a sunroof shade, the sunroof shade is disposed in the vehicle ceiling. If the lens is on a side of the optical engine body, the lens is blocked by the sunroof shade. As a result, a projection of the lens cannot be effectively projected onto the projection screen body. In this application, the lens is disposed at the bottom of the optical engine body and protrudes from an interior trim member of the vehicle ceiling, so that a projection direction of the lens is not blocked by the sunroof shade, and effectiveness of projection of the lens is ensured.

In a possible design, the lens is disposed, along a longitudinal direction of a vehicle, at an end that is of the optical engine body and that faces the projection screen assembly. An oblique surface may be designed on a portion that is on the interior trim member of the vehicle ceiling and that is close to the rear of the vehicle, and a hole may be provided on the oblique surface along the longitudinal direction of the vehicle. In this design, the lens may be disposed on a side of the optical engine body, so that the lens can be aligned with the hole provided on the oblique surface of the interior trim member, and light can be projected onto the projection screen body through the hole. In this way, the optical engine assembly may be disposed in the vehicle ceiling, and the lens does not protrude from the vehicle ceiling from the bottom of the optical engine body, to save space above the head of the passenger.

In a possible design, the optical engine body includes a light emitting module, an air inlet channel, and an air outlet channel, and the lens is connected to the light emitting module; and the air inlet channel and the air outlet channel are respectively disposed on two opposite sides of the light emitting module along a direction perpendicular to the thickness direction of the vehicle ceiling.

The air inlet channel and the air outlet channel are disposed on the two sides of the light emitting module, and air entering from the air inlet channel may flow out from the air outlet channel after passing through a heat generation module. In this way, heat can be taken away from the heat generation module, heat dissipation is implemented, and normal operation of each component in the heat generation module is ensured.

In a possible design, the optical engine body further includes a housing, the light emitting module is disposed in the housing, and the air inlet channel and the air outlet channel are respectively formed on the two sides of the light emitting module in the housing. The air inlet channel or the air outlet channel for absorbing air or exhausting air is directly formed on the two sides of the heat generation module by using a structure of the housing, so that an air inlet tube or an air outlet tube does not need to be separately arranged. This simplifies a structure.

In a possible design, the housing is provided with an air inlet and an air outlet, the air inlet communicates with the air inlet channel, and the air outlet communicates with the air outlet channel; and along the thickness direction of the vehicle ceiling, opening directions of the air inlet and the air outlet both face an inner side of the vehicle ceiling. An environment inside the housing can communicate with an environment inside the vehicle through the air inlet and the air outlet, so that airflow flowing in the vehicle can sequentially flow through the air inlet, the air inlet channel, the heat generation module, the air outlet channel, and the air outlet. This implements effective heat dissipation of the heat generation module. In addition, the opening directions of the air inlet and the air outlet both face the inner side of the vehicle ceiling, so that the air inlet and the air outlet can be prevented from being blocked by the sunroof shade and a component of the sunroof shade. This improves heat dissipation effect.

In a possible design, the optical engine assembly further includes a fan, and the fan is disposed in the air inlet channel.

The fan may blow air to the heat generation module. When the fan blows air, negative pressure is generated in the air inlet channel, so that airflow in the vehicle may enter the air inlet channel from the air inlet, and is further blown to the heat generation module by the fan, to implement continuous heat dissipation of the heat generation module.

In a possible design, the second connection structure is an adapter bracket. The adapter bracket can be used to facilitate installation of the optical engine body.

In a possible design, the second connection structure is a connection hole provided on the housing. In this way, the optical engine body can be fastened to the vehicle body sheet metal through fitting between a connection member, such as a bolt, a screw, or a rivet, and the connection hole. This facilitates disassembling and assembling of the optical engine body, and improves reliability of fastening of the optical engine body to the vehicle body sheet metal.

A third aspect of this application further provides a projection system, including the projection screen assembly provided in the first aspect of this application and the optical engine assembly provided in the second aspect of this application, where the optical engine assembly projects light onto the projection screen body in the projection screen assembly through a lens.

Related solutions and technical effects of the projection screen assembly and the optical engine assembly are the same as those described above. Details are not described herein again.

A fourth aspect of this application further provides a vehicle, including the projection system provided in the third aspect of this application, where the vehicle further includes a vehicle ceiling, the vehicle ceiling includes a vehicle body sheet metal and an interior trim member, accommodation space is formed between the interior trim member and the vehicle body sheet metal, and at least a part of the projection apparatus is disposed in the accommodation space.

In a possible design, a projection screen assembly is fastened to the vehicle body sheet metal.

In a possible design, the vehicle body sheet metal includes a first lateral beam and a second lateral beam, the first lateral beam is located in the middle of the vehicle ceiling, and a projection screen assembly is connected to the first lateral beam; and the second lateral beam is located at a tail of the vehicle ceiling, and an optical engine assembly is fastened to the second lateral beam. In this way, reliability of fastening of the projection screen assembly to the optical engine assembly can be implemented, and effective imaging between the optical engine assembly and the projection screen assembly can be implemented.

In a possible design, the vehicle further includes a sunroof shade bracket and a sunroof shade, the sunroof shade bracket is connected to the vehicle body sheet metal, a first sliding part is disposed on the sunroof shade bracket, and the sunroof shade is slidably connected to the sunroof shade bracket through the first sliding part; and a projection screen assembly is slidably connected to the vehicle body sheet metal, and the projection screen assembly is located below the sunroof shade. The projection screen assembly is disposed below the sunroof shade, so that interference to the sunroof shade during use of the projection screen assembly can be avoided, and the projection screen assembly and the sunroof shade can be used separately.

In a possible design, a second sliding part is disposed on the sunroof shade bracket, and the projection screen assembly is slidably connected to the sunroof shade bracket through the second sliding part.

The projection screen assembly and the sunroof shade may share one sunroof shade bracket, so that there is no need to separately design a bracket for the projection screen assembly. This simplifies a structure and facilitates disposing of the projection screen assembly.

In a possible design, a second hole is provided on the interior trim member, a decorative plate is disposed on a projection screen body, and the decorative plate is configured to seal the second hole in a state in which the projection screen body is accommodated in the accommodation space.

A fifth aspect of this application further provides a control method, used to control a projection screen body in the projection screen assembly provided in the first aspect of this application to be rolled or unrolled, and the control method includes:
detecting whether the projection screen body is in a rolled state;
if yes, detecting whether a position of a backrest of a front-row seat of a vehicle coincides with an unrolling path of the projection screen body; and
if yes, controlling the projection screen body to stop unrolling.

In a possible implementation, the detecting whether a position of a backrest of a front-row seat of a vehicle coincides with an unrolling path of the projection screen body specifically includes:
obtaining the position of the backrest based on a displacement of the front-row seat and an angle of the backrest; and
determining whether a position of the projection screen body coincides with the position of the backrest along an unrolling direction of the projection screen body.

In a possible implementation, if a result of the detecting whether a position of a backrest of a front-row seat of a vehicle coincides with an unrolling path of the projection screen body is no, the control method further includes:
detecting whether the projection screen body interferes with an object in an unrolling process; and
if yes, controlling the projection screen body to stop unrolling.

In a possible implementation, if a result of the detecting whether a position of a backrest of a front-row seat of a vehicle coincides with an unrolling path of the projection screen body is no, the control method further includes:
detecting whether a distance between the position of the backrest of the front-row seat of the vehicle and the projection screen body along a longitudinal direction of the vehicle is greater than a specified value; and
if yes, controlling the projection screen assembly to move toward the front-row seat.

It should be understood that the foregoing general description and the following detailed description are merely used as examples, and are not intended to limit this application.

### BRIEF DESCRIPTION OF DRAWINGS

FIG. 1 is a diagram of a structure of a vehicle;
FIG. 2 is a diagram of a structure of a vehicle body sheet metal;
FIG. 3 is a diagram in which a projection screen assembly is rolled according to an embodiment of this application;
FIG. 4 is a diagram in which a projection screen assembly is unrolled according to an embodiment of this application;
FIG. 5 is a diagram of a structure of a retractable bracket;
FIG. 6 is a diagram in which a projection screen assembly cooperates with a sunroof shade bracket;
FIG. 7 is a diagram in which another projection screen assembly is rolled according to an embodiment of this application;
FIG. 8 is a diagram in which another projection screen assembly is unrolled according to an embodiment of this application;
FIG. 9 is a diagram of a front-row seat and a projection screen assembly in a state;
FIG. 10 is a diagram of a front-row seat and a projection screen assembly in another state;
FIG. 11 is a diagram of a front-row seat and a projection screen assembly in still another state;
FIG. 12 is a diagram (1) of an optical engine assembly in a vehicle ceiling according to an embodiment of this application;
FIG. 13 is a diagram (2) of an optical engine assembly in a vehicle ceiling according to an embodiment of this application;
FIG. 14 is a diagram (1) of another optical engine assembly in a vehicle ceiling according to an embodiment of this application;
FIG. 15 is a diagram (2) of another optical engine assembly in a vehicle ceiling according to an embodiment of this application;
FIG. 16 is a flowchart (1) of a control method according to an embodiment of this application;
FIG. 17 is a flowchart (2) of a control method according to an embodiment of this application;
FIG. 18 is a flowchart (3) of a control method according to an embodiment of this application; and
FIG. 19 is a flowchart (4) of a control method according to an embodiment of this application.

### Reference numerals:

1: projection screen assembly; 11: projection screen body; 12: first driving mechanism; 121: motor; 122: reel; 13: first housing; 14: decorative plate; 15: retractable bracket; 151: segment; 16: first connection structure; 17: second housing;
2: optical engine assembly; 21: optical engine body; 211: housing; 212: air inlet channel; 212a: air inlet; 213: air outlet channel; 213a: air outlet; 214: fan; 22: lens; 23: second connection structure;
100: vehicle; 110: vehicle ceiling; 111: vehicle body sheet metal; 111a: longitudinal beam; 111b: lateral beam; 111b1: first lateral beam; 111b2: second lateral beam; 112: glass roof; 113: sunroof shade bracket; 113a: first sliding part; 113b: second sliding part; 114: sunroof shade; 115: interior trim member; 115a: second hole; 115b: oblique surface; 116: accommodation space; 117: front-row seat; 117a: backrest; 118: rear-row seat.

The accompanying drawings herein are incorporated into this specification and constitute a part of this specification, to show embodiments in accordance with this application, and are used, together with this specification, to explain the principle of this application.

### DESCRIPTION OF EMBODIMENTS

To better understand technical solutions of this application, the following describes embodiments of this application in detail with reference to the accompanying drawings. It should be understood that the specific embodiments described herein are merely used to explain this application but are not intended to limit this application.

In the description of this application, unless otherwise explicitly specified or defined, the terms "first" and "second" are merely used for a purpose of description, and shall not be understood as an indication or implication of relative importance. Unless otherwise specified or explained, the term "a plurality of" refers to two or more. The terms "connection", "fixed", and the like should be understood in a broad sense. For example, the "connection" may be a fixed connection, or may be a detachable connection, an integrated connection, or an electrical connection; or the "connection" may be a direct connection, or an indirect connection through an intermediate medium. A person of ordinary skill in the art may understand specific meanings of the foregoing terms in this application based on specific situations.

Currently, more vehicles are equipped with cabin entertainment systems, for example, projection screens for passengers to watch videos. An existing projection screen is generally separately accommodated. During use, the projection screen needs to be manually installed at a specific position on a vehicle, and needs to be removed and placed in a storage place such as a trunk again after use. For example, the vehicle may include a hook, and the projection screen may be manually suspended on the hook during use and be removed from the hook for accommodation after use, which is complex. In addition, the projection screen is generally accommodated in a storage place such as a trunk in the vehicle. However, another object is usually placed in the storage place. Some objects with edges and corners are prone to damage or pollute the projection screen, and video watching effect is affected.

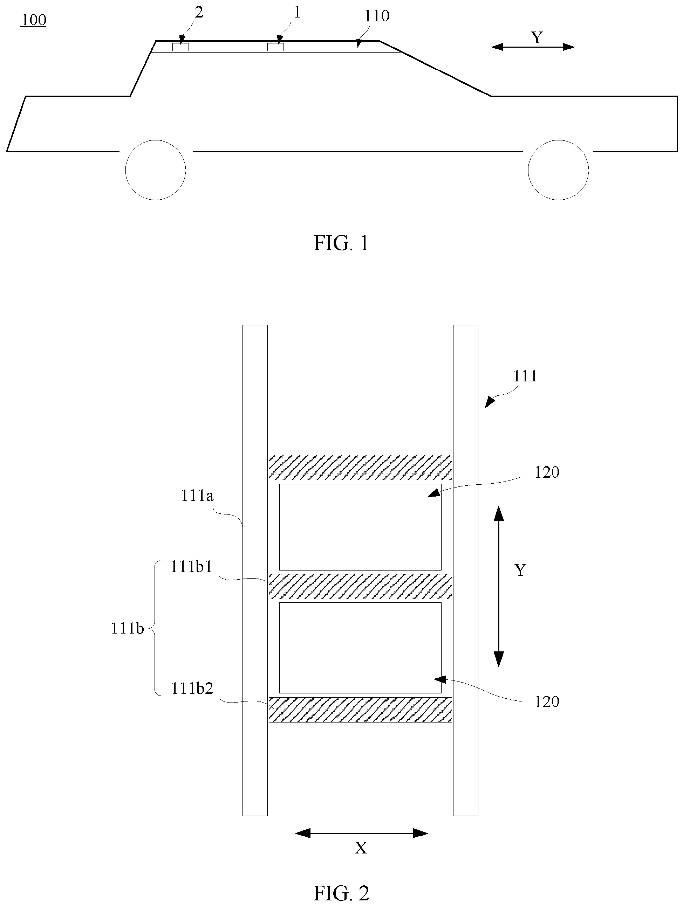

An embodiment of this application provides a projection screen assembly 1, an optical engine assembly 2, a projection system, and a vehicle 100. As shown in FIG. 1, the vehicle 100 may be but is not limited to a sport utility vehicle (sport utility vehicle, SUV), a multi-purpose vehicle (multiple purpose vehicle, MPV), a sedan, a recreational vehicle, a van, a bus, a truck, or the like.

As shown in FIG. 1, the projection system may be disposed in a ceiling of the vehicle 100. The projection system includes the projection screen assembly 1 and the optical engine assembly 2. Light projected by the optical engine assembly 2 may be imaged on the projection screen assembly 1. During use, a projection screen body 11 configured for imaging in the projection screen assembly 1 may be controlled to extend from the vehicle ceiling 110, and can be opposite to the optical engine assembly 2, so that light projected by the optical engine assembly 2 can be imaged on the projection screen body 11. After the use ends, the projection screen body 11 may be re-controlled to be accommodated in the vehicle ceiling 110, so that the projection screen assembly 1 does not need to be manually installed or accommodated. In this way, an operation is convenient, and the projection screen assembly 1 can be prevented from being damaged or polluted by another object.

Specifically, as shown in FIG. 2 to FIG. 4, the projection screen assembly 1 includes a first connection structure 16, a first driving mechanism 12, and the projection screen body 11. The projection screen assembly 1 may be connected to a vehicle body sheet metal 111 in the vehicle ceiling 110 through the first connection structure 16. The projection screen body 11 is connected to the first driving mechanism 12, and the projection screen rolls up into or extends out of the vehicle ceiling 110 through driving of the first driving mechanism 12. The first driving mechanism 12 can be connected to a main control system in the vehicle 100 through a signal. When the main control system sends a first signal, the first driving mechanism 12 is turned on, to control the projection screen body 11 to extend from the vehicle ceiling 110 for a passenger to watch a video. When the main control system sends a second signal, the projection screen body 11 may be re-accommodated in the vehicle ceiling 110. Specifically, a driver or the passenger may manually operate a control panel or a dedicated switch of the vehicle 100 to enable the main control system to send the first signal or the second signal. Certainly, a remote control dedicated to controlling the projection screen body 11 to ascend or descend may also be configured, and the ascending/descending and rolling/unrolling of the projection screen body 11 are controlled by using a remote control signal sent by the remote control.

Therefore, in this application, the projection screen assembly 1 is integrated into the vehicle ceiling 110, so that a use operation is convenient, and accommodation management of the projection screen assembly 1 is implemented. In this way, the projection screen assembly 1 is prevented from being damaged or polluted by another object, and use experience of a user is improved.

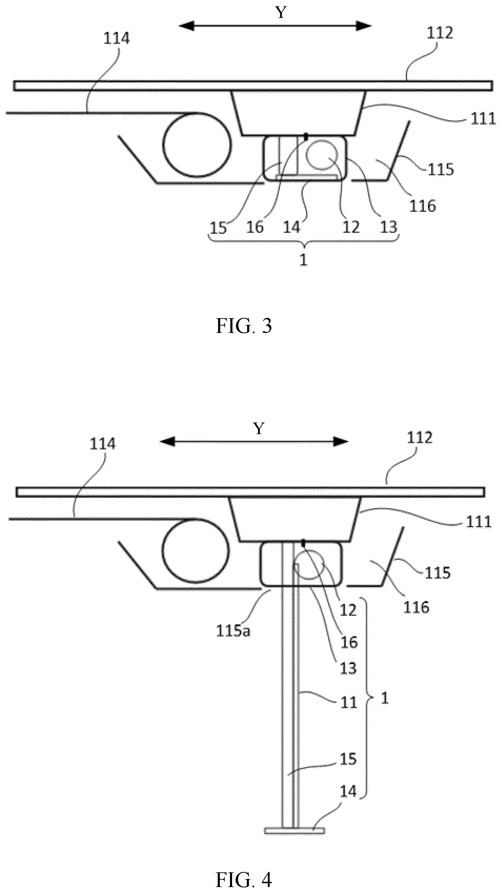

As shown in FIG. 2 and FIG. 3, the vehicle ceiling 110 may include the vehicle body sheet metal 111 and an interior trim member 115. The interior trim member 115 is connected to an inner side of the vehicle body sheet metal 111, and is used as a part of interior trim of the entire vehicle. The interior trim member 115 has lower rigidity compared with that of the vehicle body sheet metal 111. The interior trim member 115 can cover an inner side of a vehicle body beam, and can block a sheet metal part from the inside of the vehicle 100, to prevent the driver or the passenger from hitting the sheet metal and getting injured, and to improve visual effect and a texture of the vehicle 100. The vehicle body sheet metal 111 is a metal part with relatively high rigidity, and may be used as a framework of the vehicle ceiling 110. Therefore, the projection screen assembly 1 is connected to the vehicle body sheet metal 111, to ensure reliability of the connection of the projection screen assembly 1. In this embodiment, accommodation space 116 may be formed between the interior trim member 115 and the vehicle body sheet metal 111, and the projection screen assembly 1 may be disposed in the accommodation space 116, so that the projection screen assembly 1 can be separately accommodated, and the projection screen assembly 1 can be prevented from being damaged by another object.

In this embodiment, there is no need to dispose an additional structure such as a hook on the interior trim member 115 or the vehicle body beam, and there is no need to make a great change to a manufacturing process of the vehicle body beam or the interior trim member 115. Only space used for disposing the projection screen assembly 1 is reserved between the vehicle body sheet metal 111 and the interior trim member 115, so that production costs are reduced and arrangement of the projection screen assembly 1 is facilitated.

Specifically, as shown in FIG. 3 and FIG. 4, in an embodiment, the projection screen assembly 1 further includes a first housing 13. The first housing 13 is disposed in the vehicle ceiling 110, the first housing 13 is connected to the vehicle body sheet metal 111 through the first connection structure 16, the first driving mechanism 12 is disposed in the first housing 13, the first housing 13 is provided with a first hole, and the projection screen body 11 rolls up into or extends out of the first housing 13 through the first hole.

The first housing 13 may be disposed in the accommodation space 116 between the vehicle body sheet metal 111 and the interior trim member 115 as a whole, and the first connection structure 16 may be a connection hole formed on the first housing 13, so that the first housing 13 can be fastened to the vehicle body sheet metal 111 through fitting between a connection member, such as a bolt, a screw, or a rivet, and a connection hole, to facilitate connection between the projection screen assembly 1 and the vehicle ceiling 110. In addition, protection on the first driving mechanism 12 and the projection screen body 11 can also be implemented through the first housing 13, to prevent the projection screen body 11 from being damaged or polluted by an external object. The first hole of the first housing 13 faces the inside of the vehicle 100, so that the projection screen body 11 can ascend/descend and be rolled/unrolled in a height direction of the vehicle 100 through the first hole.

In addition, the first connection structure 16 may alternatively be an adapter bracket, and the entire projection screen assembly 1 may be connected to the vehicle body sheet metal 111 through the adapter bracket. Specifically, one end of the adapter bracket may be connected to the first housing 13, and the other end of the adapter bracket may be connected to the vehicle body sheet metal 111. The adapter bracket can be used to facilitate installation of the projection screen assembly 1. The adapter bracket may be designed based on an installation environment inside the vehicle ceiling 110. This is not limited in this embodiment.

Specifically, as shown in FIG. 3 and FIG. 4, the projection screen assembly 1 further includes a decorative plate 14, where the decorative plate 14 is connected to the bottom of the projection screen body 11, and the decorative plate 14 is configured to seal the first hole in a state in which the projection screen body 11 is accommodated in the first housing 13. A shape of the decorative plate 14 may be equivalent to a shape of the first hole, for example, the first hole may be a rectangular hole, and the shape of the decorative plate 14 may also be rectangular. When the projection screen body 11 is accommodated in the first housing 13, the decorative plate 14 can seal the first hole, so that external impurities, liquids, and the like can be prevented from entering the first housing 13 and polluting the first driving mechanism 12 and the projection screen body 11, and an appearance can also be prevented from being affected by exposure of components such as the projection screen body 11. In addition, the decorative plate 14 also has a specific weight, and may be used as a counterweight of the projection screen. When the projection screen body 11 descends or the projection screen body 11 is in normal use, the decorative plate 14 can maintain stability of a descending machine of the projection screen body 11 during use of the descending machine. This improves video watching experience.

It may be understood that, as shown in FIG. 4, a second hole 115a may be provided on the interior trim member 115, the second hole 115a is aligned with and communicates with the first hole, and the projection screen body 11 in the first housing 13 may extend out of the interior trim member 115 sequentially through the first hole and the second hole 115a, and is unrolled for imaging. In a state in which the projection screen body 11 is accommodated in the accommodation space 116, the decorative plate 14 can seal the second hole 115a, so that the projection screen assembly 1 can also be sealed in the accommodation space 116 between the interior trim member 115 and the vehicle body sheet metal 111. In a state in which the projection screen body 11 is accommodated in the accommodation space 116, the decorative plate 14 can be embedded into the second hole 115a, to implement splicing with an edge of the second hole 115a, so that a surface that is of the decorative plate 14 and that faces the inside of the vehicle 100 is flush with a surface that is of the interior trim member 115 and that faces the inside of the vehicle 100. This improves effect of the appearance of the interior trim of the vehicle 100.

Specifically, as shown in FIG. 4, the projection screen body 11 further includes a retractable bracket 15. One end of the retractable bracket 15 is disposed on the first housing 13, the other end of the retractable bracket 15 is connected to the projection screen body 11, and the other end of the retractable bracket 15 may be accommodated in or extend out of the first housing 13 as the projection screen body 11 moves. The other end of the retractable bracket 15 may be directly connected to the projection screen body 11, or may be indirectly connected to the projection screen body 11 through a structure such as the decorative plate 14.

It may be understood that the projection screen body 11 is relatively soft, and is prone to be twisted or creased in a process of unrolling or rolling and in a state in which the vehicle 100 shakes. This reduces video watching experience. Therefore, in this embodiment, the retractable bracket 15 may support a back of the projection screen body 11, so that the projection screen body 11 can be prevented from being twisted when the vehicle 100 shakes. This can ensure stability of the projection screen body 11 in an in-use state, and improve video watching experience. In addition, in a process of rolling or unrolling the projection screen body 11, the retractable bracket 15 can also support the projection screen body 11 through extending or shrinking in the entire process of rolling or unrolling the projection screen body 11. This ensures smooth and crease-free rolling or unrolling of the projection screen body 11.

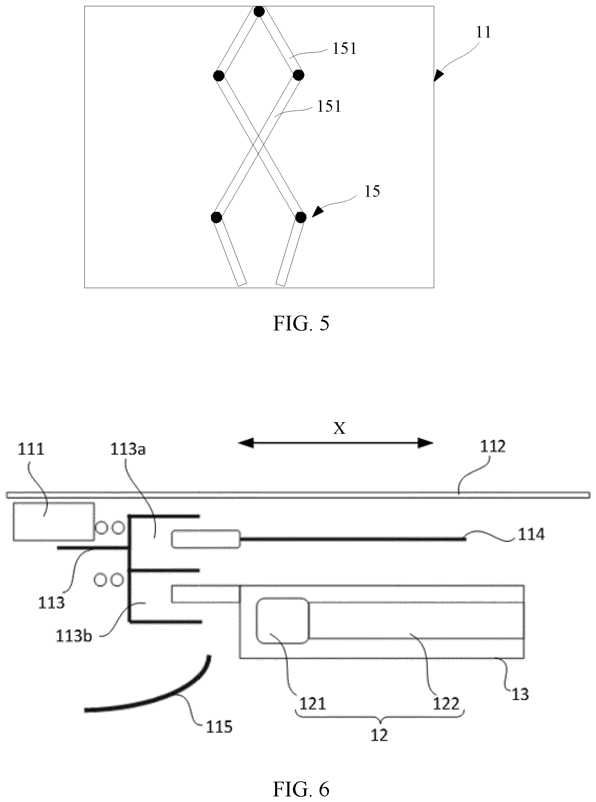

As shown in FIG. 5, the retractable bracket 15 may include a plurality of segments 151, and the plurality of segments 151 may be rotatably connected, so that the plurality of segments 151 can be folded or unfolded. This implements "extending or shrinking" of the retractable bracket 15.

Specifically, as shown in FIG. 6, the first driving mechanism 12 includes a motor 121 and a reel 122. The motor 121 is connected to the reel 122, and is configured to drive the reel 122 to rotate, and one end of the projection screen body 11 is connected to the reel 122. When the motor 121 drives the reel 122 to rotate, the projection screen body 11 may be rolled around the reel 122, or may be released from the reel 122 and unrolled. In this way, rolling or unrolling of the projection screen body 11 can be facilitated through cooperation between the motor 121 and the reel 122.

In addition, the projection screen assembly 1 may be fastened in the vehicle ceiling 110, and the projection screen body 11 may be directly controlled to be rolled or unrolled during use. However, for a vehicle 100 with relatively small space, for example, a compact sedan or an SUV, a distance between a front-row seat 117 and a rear-row seat 118 is relatively small. For a tall passenger with a heavy weight, the projection screen body 11 is relatively close to human eyes, and optimal video watching experience cannot be achieved.

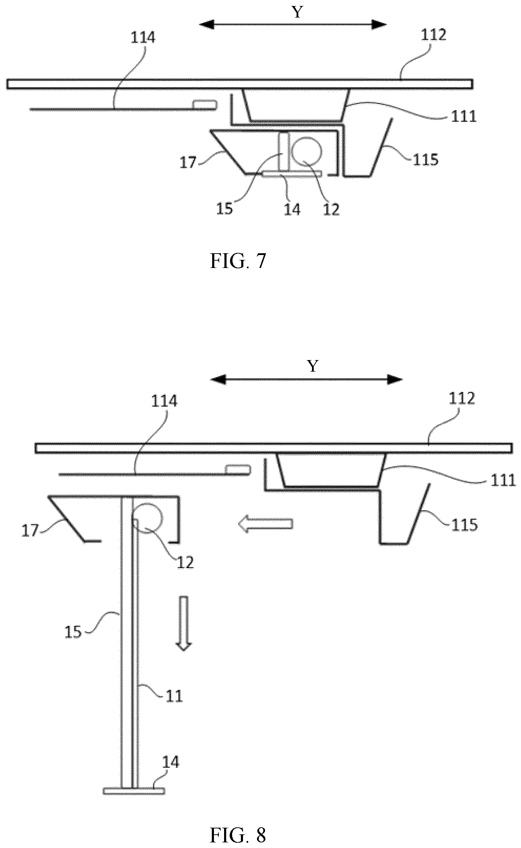

Therefore, as shown in FIG. 7 and FIG. 8, in another embodiment provided in this application, the projection screen assembly 1 can be slidably connected to the vehicle body sheet metal 111 along a longitudinal direction Y of the vehicle 100 through the first connection structure 16. In this way, a position of the projection screen assembly 1 can be adjusted forward and backward, so that a passenger can adjust the projection screen assembly 1 to a proper position based on a requirement. This can better improve video watching experience.

Specifically, in this embodiment, for ease of description, the crowd is divided into tall crowd and short crowd. The tall crowd accounts for 95%, and the short crowd accounts for 5%.

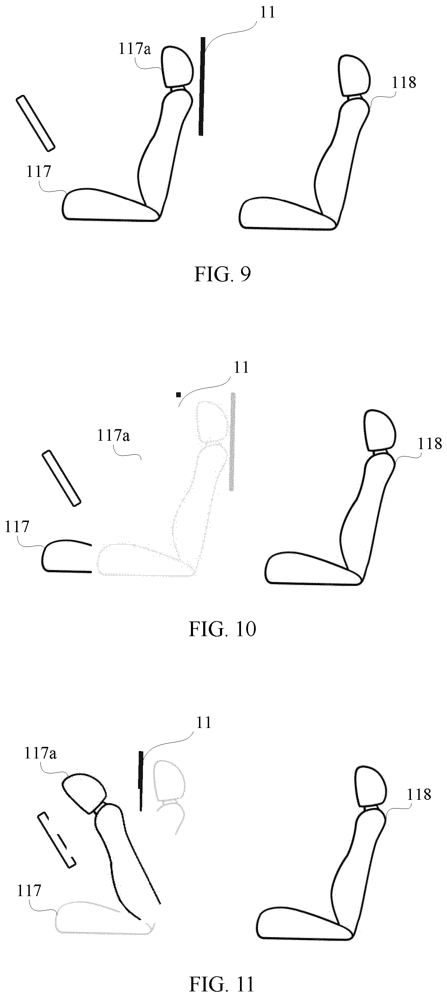

As shown in FIG. 9, when a driver or a passenger located in the front-row seat 117 belongs to the tall crowd accounting for 95%, a distance kept between the front-row seat 117 and a dashboard needs to be large enough. In this case, the front-row seat 117 cannot be excessively close to the dashboard, and the projection screen assembly 1 cannot slide forward for a relatively large distance. Otherwise, the projection screen assembly 1 collides with a backrest 117a of the front-row seat 117. In this case, a distance between the projection screen assembly 1 and a passenger in the rear row is relatively small.

As shown in FIG. 10, when a driver or a passenger located in the front-row seat 117 belongs to the short crowd accounting for 5%, space between the front-row seat 117 and the dashboard does not need to be quite large, and the front-row seat 117 may be adjusted to be close to the dashboard, so that a distance between the front-row seat 117 and the rear-row seat 118 is increased. In this case, the projection screen assembly 1 may slide forward through the first connection structure 16, and a furthest position to which the projection screen assembly 1 slides may be a position at which the projection screen body 11 does not interfere with the front-row seat 117. In this way, a video watching distance between the projection screen body 11 and the passenger in the rear row can be increased. This improves video watching experience.

The position of the projection screen assembly 1 may be adjusted during traveling, or may be adjusted during parking. The position of the projection screen assembly 1 is not affected by a traveling status, and can be adjusted based on a requirement. This improves video watching experience.

Specifically, as shown in FIG. 11, when the vehicle 100 is in a parking mode, a driver or a passenger in the front-row seat 117 may not be in the vehicle. In this case, the front-row seat 117 may be further adjusted toward a direction of the dashboard, and the backrest 117a of the front-row seat 117 may be tilted forward. In this case, larger space may be provided for forward adjustment of the projection screen assembly 1, and a distance between a passenger in the rear-row seat 118 and the projection screen body 11 can be further increased. This provides more choices for different passengers.

Specifically, as shown in FIG. 7 and FIG. 8, the projection screen assembly 1 may include a second housing 17, where the first driving mechanism 12 is disposed in the second housing 17, and the projection screen body 11 rolls up into or extends out of the second housing 17. The second housing 17 may be disposed in the accommodation space 116 between the vehicle body sheet metal 111 and the interior trim member 115 as a whole. In this way, protection on the first driving mechanism 12 and the projection screen body 11 can be implemented, to prevent the projection screen body 11 from being damaged or polluted by an external object.

The first connection structure 16 may include a sliding rail, a slider, and a second driving mechanism, where the sliding rail may be connected to the vehicle body sheet metal 111. The "connection" may be a direct connection or an indirect connection. For example, the sliding rail may be directly fastened to the vehicle body sheet metal 111 through a connection member, such as a bolt or a rivet, or may be indirectly connected to the vehicle body sheet metal 111 through a structure such as a bracket. The slider is connected to the second housing 17, the second housing 17 is slidably connected to the sliding rail through the slider, and the second driving mechanism is connected to the second housing 17 and is configured to drive the second housing 17 to move along the sliding rail.

The second driving mechanism may be a motor 121, a cylinder, or the like. The second driving mechanism can provide a forward or backward acting force for the second housing, so that the second housing can implement relative sliding through cooperation between the sliding rail and the slider. This implements adjustment of the position of the projection screen assembly 1 and is convenient to control. The second driving mechanism may be connected to the main control system of the vehicle 100 through a signal, or the second driving mechanism may be controlled to be turned on or turned off through a switch, or a signal connection to the second driving mechanism may be established through a remote control. This is not limited in this embodiment.

As shown in FIG. 2, the vehicle body sheet metal 111 may include a lateral beam 111b and a longitudinal beam 111a, where the lateral beam 111b is a beam extending along a lateral direction X of the vehicle 100, and the longitudinal beam 111a is a beam extending along the longitudinal direction Y of the vehicle 100. The sliding rail may be disposed on the longitudinal beam 111a, and the sliding rail can extend along the longitudinal beam 111a, so that the projection screen assembly 1 can slide forward and backward, and reliability of fastening of the sliding rail can be ensured.

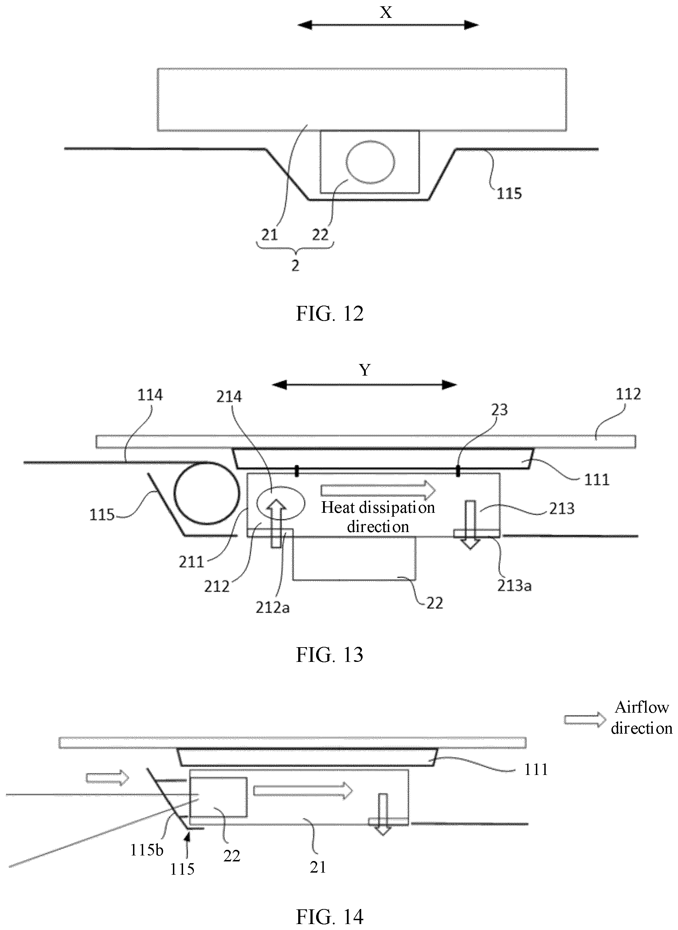

As shown in FIG. 12 and FIG. 13, this application further provides an optical engine assembly 2. There is a specific gap between the optical engine assembly 2 and the projection screen assembly 1, so that light projected by the optical engine assembly 2 can be imaged on the projection screen body 11 of the projection screen assembly 1.

It should be noted that an existing optical engine includes a lens 22 in a length or width direction of the optical engine, and the optical engine is generally directly placed behind the rear-row seat 118. However, the optical engine is prone to move or even fall when the vehicle 100 is bumping. In addition, light emitted by the optical engine needs to pass through a position between two rear-row seats, which sometimes affects a passenger in the rear row close to the optical engine. This brings great inconvenience to the passenger.

In this embodiment, as shown in FIG. 12 and FIG. 13, the optical engine assembly 2 includes a second connection structure 23, an optical engine body 21, and the lens 22. The optical engine body 21 is disposed in the vehicle ceiling 110, and the optical engine body 21 is connected to the vehicle body sheet metal 111 in the vehicle ceiling 110 through the second connection structure 23. The lens 22 is connected to the optical engine body 21, the lens 22 extends out of the vehicle ceiling 110, and the lens 22 is configured to project light onto the projection screen body 11 provided in any embodiment of this application, so that the light can be imaged on the projection screen body 11.

According to the optical engine assembly 2 provided in this embodiment of this application, the optical engine assembly 2 is disposed in the vehicle ceiling, only the lens 22 protrudes from the ceiling, and a size of the lens 22 is relatively small, so that the optical engine assembly 2, compared with an existing optical engine, can save large space in the vehicle. In addition, the lens 22 is located at the vehicle ceiling 110, so that the lens 22 may be located above a head of a passenger, and light emitted by the lens 22 does not affect eyes of the passenger. In this way, the passenger can have relatively good video watching experience.

Specifically, in an embodiment, as shown in FIG. 12 and FIG. 13, along the thickness direction of the vehicle ceiling 110, the lens 22 is disposed at the bottom of the optical engine body 21. For a vehicle 100 having a glass roof 112 and a sunroof shade 114, the sunroof shade 114 is disposed in the vehicle ceiling 110. If the lens 22 is on a side of the optical engine body 21, the lens 22 is blocked by the sunroof shade 114. As a result, a projection of the lens 22 cannot be effectively projected onto the projection screen body 11. In this application, the lens 22 is disposed at the bottom of the optical engine body 21 and protrudes from the interior trim member 115 of the vehicle ceiling 110, so that a projection direction of the lens 22 is not blocked by the sunroof shade 114, and effectiveness of projection of the lens 22 is ensured.

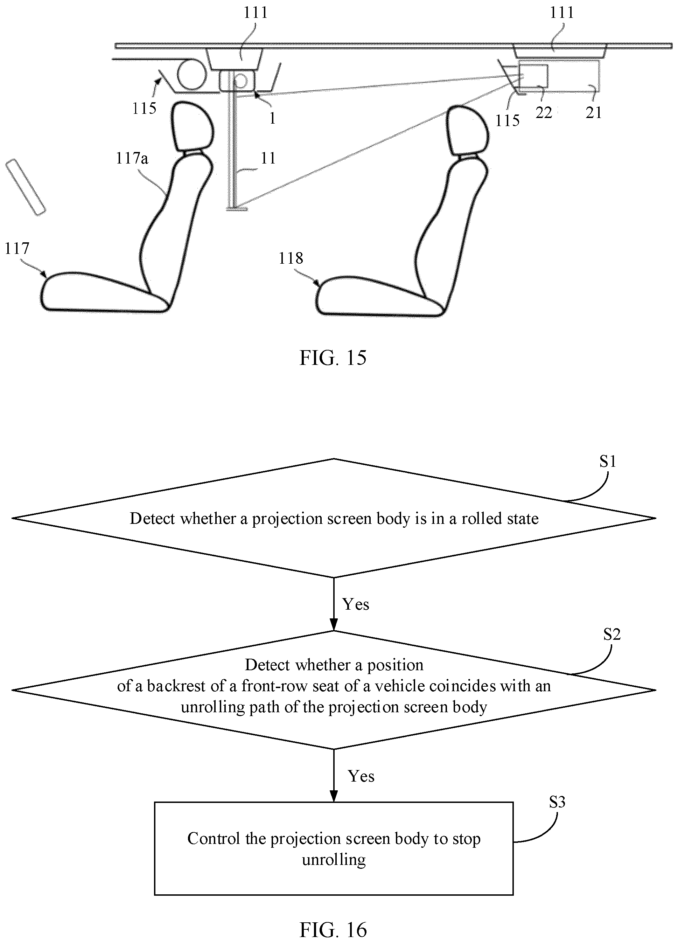

In addition, in another embodiment, as shown in FIG. 14 and FIG. 15, along the longitudinal direction of the vehicle 100, the lens 22 is disposed at an end that is of the optical engine body 21 and that faces the projection screen assembly 1. An oblique surface 115b may be designed on a portion that is on the interior trim member 115 of the vehicle ceiling 110 and that is close to the rear of the vehicle, and a hole may be provided on the oblique surface 115b along the longitudinal direction Y of the vehicle 100. In this design, the lens 22 may be disposed on a side of the optical engine body 21, so that the lens 22 can be aligned with the hole provided on the oblique surface 115b of the interior trim member 115, and light can be projected onto the projection screen body 11 through the hole. In this way, the optical engine assembly 2 may be disposed in the vehicle ceiling 110, and the lens 22 does not protrude from the vehicle ceiling 110 from the bottom of the optical engine body 21, to save space above the head of the passenger.

In an embodiment, the second connection structure 23 may be an adapter bracket. The optical engine body 21 may be connected to the vehicle body sheet metal 111 through the adapter bracket. Specifically, one end of the adapter bracket may be connected to the optical engine body 21, and the other end of the adapter bracket may be connected to the vehicle body sheet metal 111. The adapter bracket can be used to facilitate installation of the optical engine body 21. The adapter bracket may be designed based on an installation environment inside the vehicle ceiling 110. This is not limited in this embodiment.

In another embodiment, the second connection structure 23 may alternatively be a connection hole provided on the optical engine body 21. In this way, the optical engine body 21 can be fastened to the vehicle body sheet metal 111 through fitting between a connection member, such as a bolt, a screw, or a rivet, and the connection hole. This facilitates disassembling and assembling of the optical engine body 21, and improves reliability of fastening of the optical engine body 21 to the vehicle body sheet metal 111.

Specifically, as shown in FIG. 13, the optical engine body 21 includes a light emitting module, an air inlet channel 212, and an air outlet channel 213, where the lens 22 is connected to the light emitting module. The air inlet channel 212 and the air outlet channel 213 are respectively disposed on two opposite sides of the light emitting module along a direction perpendicular to the thickness direction of the vehicle ceiling 110. Heating components such as a chip and a circuit board are integrated inside the light emitting module. Because the optical engine body 21 is disposed in relatively sealed space in the vehicle ceiling 110, the air inlet channel 212 and the air outlet channel 213 may be disposed on the two sides of the light emitting module, and air entering from the air inlet channel 212 may flow out from the air outlet channel 213 after passing through a heat generation module, so that each heat generation component in the light emitting module has good heat dissipation effect. In this way, heat can be taken away from the heat generation module, heat dissipation is implemented, and normal operation of each component in the heat generation module is ensured.

Specifically, as shown in FIG. 13, the optical engine body 21 further includes a housing 211, where the light emitting module is disposed in the housing 211, and the air inlet channel 212 and the air outlet channel 213 are respectively formed on the two sides of the light emitting module in the housing 211. The housing 211 may protect the light emitting module, and also facilitate installation and fastening of the optical engine assembly 2 in the vehicle ceiling 110. Specifically, the housing 211 may be fastened to the vehicle body sheet metal 111 through the second connection structure 23. The second connection structure 23 may be a connection hole formed on the housing 211. The housing 211 may be fastened and installed on the vehicle body sheet metal 111 through fitting between a connection member, such as a bolt, a screw, or a rivet, and the connection hole, to facilitate operation. In addition, the air inlet channel 212 or the air outlet channel 213 for absorbing air or exhausting air is directly formed on the two sides of the heat generation module by using a structure of the housing 211, so that an air inlet tube or an air outlet tube does not need to be separately arranged. This simplifies a structure.

Specifically, as shown in FIG. 13, in a design in which the lens 22 is disposed at the bottom of the optical engine body 21, the housing 211 is provided with an air inlet 212a and an air outlet 213a, where the air inlet 212a communicates with the air inlet channel 212, and the air outlet 213a communicates with the air outlet channel 213. Along the thickness direction of the vehicle ceiling 110, opening directions of the air inlet 212a and the air outlet 213a both face an inner side of the vehicle ceiling 110.

An environment inside the housing 211 can communicate with an environment inside the vehicle 100 through the air inlet 212a and the air outlet 213a, so that airflow flowing in the vehicle can sequentially flow through the air inlet 212a, the air inlet channel 212, the heat generation module, the air outlet channel 213, and the air outlet 213a. This implements effective heat dissipation of the heat generation module.

In addition, for a vehicle 100 in which a sunroof shade bracket 113 is integrated in the vehicle ceiling 110, the sunroof shade bracket 113 and a related component of the sunroof shade bracket 113 occupy relatively large space in the vehicle ceiling 110. If heat dissipation opening of the optical engine body 21 is provided on two sides of the optical engine body 21 along the longitudinal direction Y of the vehicle 100, the heat dissipation opening is blocked by the sunroof shade bracket 113 and the related component of the sunroof shade bracket 113. As a result, heat at the heat dissipation opening cannot be diffused in time, and hot airflow accumulates near the optical engine body 21. A temperature of the optical engine body 21 is increased, and performance of the optical engine assembly 2 is affected. In this embodiment, as shown in FIG. 13, opening directions of the air inlet 212a and the air outlet 213a both face the inner side of the vehicle ceiling 110, so that the air inlet 212a and the air outlet 213a can be prevented from being blocked by the sunroof shade bracket 113 and the component of the sunroof shade bracket 113. This improves heat dissipation effect.

In addition, as shown in FIG. 14, in the design in which the lens 22 is disposed on the side of the optical engine body 21, the air inlet may be located on the side of the optical engine body 21, and can be aligned with and communicate with the hole on the oblique surface 115b of the interior trim member 115. In other words, the hole on the oblique surface 115b may be used as a hole for light projection, or may be used as a hole for airflow flowing. To be specific, airflow may enter the optical engine body 21 sequentially through the hole on the oblique surface 115b and the air inlet, to dissipate heat for the heat generation module.

Specifically, as shown in FIG. 13, the optical engine assembly 2 further includes a fan 214, where the fan 214 is disposed in the air inlet channel 212. The fan 214 may blow air to the heat generation module. When the fan 214 blows air, negative pressure is generated in the air inlet channel 212, so that the airflow in the vehicle may enter the air inlet channel 212 from the air inlet 212a, and is further blown to the heat generation module by the fan 214. This implements continuous heat dissipation for the heat generation module.

An embodiment of this application further provides a projection system that includes the projection screen assembly 1 and the optical engine assembly 2 that are provided in any embodiment of this application. The optical engine assembly 2 projects light onto the projection screen body 11 in the projection screen assembly 1 through the lens 22. Related solutions and technical effects of the projection screen assembly 1 and the optical engine assembly 2 are the same as those described above. Details are not described herein again.

In addition, an embodiment of this application further provides a vehicle 100. The vehicle 100 may be a plurality of different types of vehicles described above. For ease of description, in this embodiment, an example in which the vehicle 100 is a vehicle 100 with two rows and four seats is used for description.

As described above, the vehicle ceiling 110 includes the vehicle body sheet metal 111 and the interior trim member 115, and the interior trim member 115 is connected to the inner side of the vehicle body sheet metal 111. As shown in FIG. 2, the vehicle body sheet metal 111 of the vehicle 100 may specifically include a first lateral beam 111b1 and a second lateral beam 111b2, where the first lateral beam 111b1 is located in the middle of the vehicle ceiling 110, and the projection screen assembly 1 is connected to the first lateral beam 111b1. The second lateral beam 111b2 is located at a tail of the vehicle ceiling 110, and the optical engine body 21 is fastened to the second lateral beam 111b2. For the vehicle 100 with two rows and four seats, the first lateral beam 111b1 may be located in an area between the front-row seats and the rear-row seats, and the second lateral beam 111b2 may be located in an area behind the rear-row seat 118.

When the projection screen assembly 1 cannot be moved, the projection screen assembly 1 may be fastened to the first lateral beam 111b1, and specifically, may be fastened to the first lateral beam 111b1 through a connection member, such as a bolt, a screw, or a rivet. When the projection screen assembly 1 is movable, the projection screen assembly 1 may be slidably connected to the first lateral beam 111b1. The optical engine body 21 may also be fastened to the second lateral beam 111b2 through a connection member, such as a bolt, a screw, or a rivet, to ensure reliability of fastening of the optical engine body 21.

Certainly, for a vehicle 100 with more than four seats, for example, a vehicle 100 with eight seats or ten seats, the first lateral beam 111b1 may also be located in the middle of the vehicle ceiling 110, or may be located at a position such as 1/3 or 2/3 of the vehicle 100 along the longitudinal direction Y, and the second lateral beam 111b2 may also be located at the tail of the vehicle ceiling 110, or may be located at another position that is at a specific distance from the projection screen assembly 1.

In a specific implementation, as shown in FIG. 6, the vehicle 100 further includes a bracket of the sunroof shade bracket 113 and the sunroof shade bracket 113, where the bracket of the sunroof shade bracket 113 is connected to the vehicle body sheet metal 111, a first sliding part 113a is disposed on the bracket of the sunroof shade bracket 113, and the sunroof shade bracket 113 is slidably connected to the bracket of sunroof shade bracket 113 through the first sliding part 113a; and the projection screen assembly 1 is slidably connected to the vehicle body sheet metal 111, and the projection screen assembly 1 is located below the sunroof shade bracket 113. For the vehicle 100 in which the sunroof shade bracket 113 and the bracket of the sunroof shade bracket 113 are disposed, the glass roof 112 is disposed on the vehicle ceiling 110. When the sunroof shade bracket 113 is slidably open through the first sliding part 113a, external light may be illuminated to the inside of the vehicle 100 through the glass roof 112. When the sunroof shade bracket 113 is slidably close through the first sliding part 113a, external light may be blocked from passing through the glass roof 112, to achieve a purpose of sun shielding.

The projection screen assembly 1 is disposed below the sunroof shade bracket 113, so that interference to the sunroof shade bracket 113 during use of the projection screen assembly 1 can be avoided, and the projection screen assembly 1 and the sunroof shade bracket 113 can be used separately.

In an embodiment, the projection screen assembly 1 may be slidably connected to the vehicle body sheet metal 111 through a bracket, and the bracket and the bracket of the sunroof shade bracket 113 may be two different brackets.

In another embodiment, as shown in FIG. 6, a second sliding part 113b may be disposed on the bracket of the sunroof shade bracket 113, and the projection screen assembly 1 is slidably connected to the bracket of the sunroof shade bracket 113 through the second sliding part 113b. In this embodiment, the projection screen assembly 1 and the sunroof shade bracket 113 may share one bracket of the sunroof shade bracket 113, so that there is no need to separately design a bracket for the projection screen assembly 1. This simplifies a structure and facilitates disposing of the projection screen assembly 1.

As shown in FIG. 16, embodiments of this application further provide a control method. The control method may be used to control the projection screen body 11 in the projection screen assembly 1 provided in any embodiment of this application to be rolled or unrolled. In this embodiment, an example in which the control method controls the projection screen assembly 1 in the vehicle 100 with two rows and four seats is used for description. The control method includes the following steps.

Step S1: Detect whether the projection screen body 11 is in a rolled state, and if yes, perform step S2.

The rolled state is a state in which the projection screen body 11 is accommodated in the vehicle ceiling 110.

Step S2: Detect whether a position of the backrest 117a of the front-row seat 117 of the vehicle 100 coincides with an unrolling path of the projection screen body 11, and if yes, perform step S3.

Step S3: Control the projection screen body 11 to stop unrolling.

It may be understood that, the projection screen assembly 1 is located behind the front-row seat 117 of the vehicle 100, to facilitate a passenger in the rear row to watch a video by using the proj ection screen assembly 1. The front-row seat 117 of the vehicle 100 can be adjusted forward and backward based on a requirement of the passenger, and an angle of the backrest 117a of the vehicle 100 can also be adjusted, so that the passenger has a comfortable seating posture. The front-row seat 117 is adjusted forward and backward or the backrest 117a is adjusted in inclination, which causes a change in a distance between the backrest 117a and the projection screen assembly 1 in a longitudinal direction Y of the vehicle 100. If the backrest 117a of the front-row seat 117 is located right below the projection screen assembly 1, that is, the backrest 117a blocks a downward unrolling path of the projection screen body 11, interference occurs between the projection screen body 11 and the backrest 117a. In this case, the projection screen body 11 may be controlled to stop unrolling. In this case, if the projection screen assembly 1 needs to be continued to be used to watch a video, a passenger in the front row may adjust a seat posture, so that the front-row seat 117 is removed from the downward unrolling path of the projection screen body 11.

However, if the backrest 117a of the front-row seat 117 does not block the downward unrolling path of the projection screen body 11, the projection screen body 11 can be normally unrolled downward, and no interference occurs.

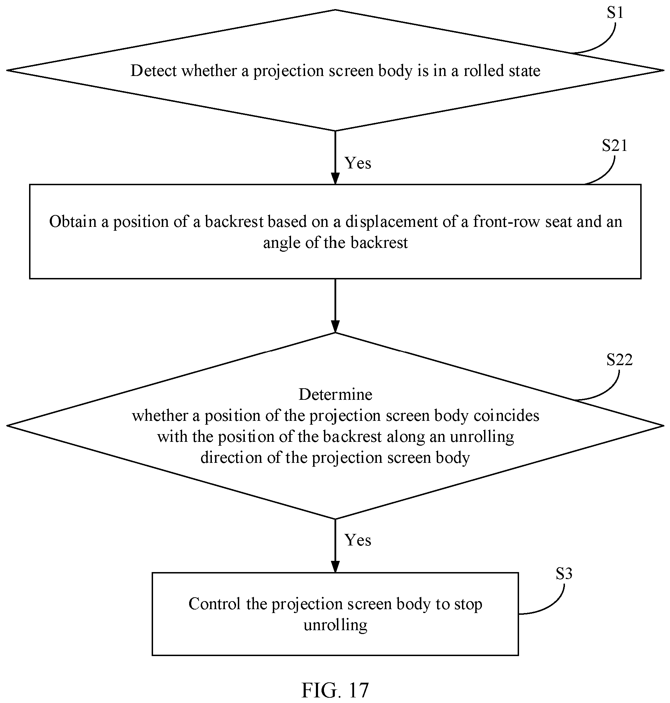

Specifically, as shown in FIG. 17, in step S2, the detecting whether a position of the backrest 117a of the front-row seat 117 of the vehicle 100 coincides with an unrolling path of the projection screen body 11 specifically includes the following steps.

Step S21: Obtain the position of the backrest 117a based on a displacement of the front-row seat 117 and an angle of the backrest 117a.

A Hall sensor or position sensor may be disposed near the front-row seat 117, and can detect the displacement of the seat and the angle of the backrest 117a, so that the position of the backrest 117a may be obtained based on the displacement of the front-row seat 117 and the angle of the backrest 117a.

Step S22: Determine whether a position of the projection screen body 11 coincides with the position of the backrest 117a along an unrolling direction of the projection screen body 11.

When the projection screen body 11 may be slidably adjusted relative to the vehicle body sheet metal 111, the position of the projection screen body 11 may also be obtained by using a detection apparatus such as the position sensor. When the projection screen body 11 cannot be slidably adjusted relative to the vehicle body sheet metal 111, the position of the projection screen body 11 may be preset in the main control system of the vehicle 100, to facilitate comparison and analysis with the detected position information of the seat.

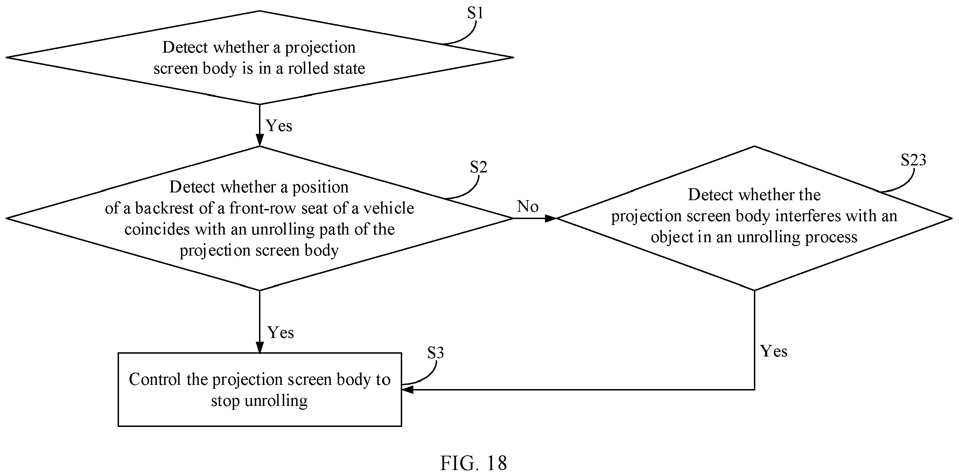

Specifically, as shown in FIG. 18, if a detection result of step 2 is no, the control method further includes the following step.

Step S23: Detect whether the projection screen body 11 interferes with an object in an unrolling process, and if yes, perform step S3.

When the backrest 117a of the front-row seat 117 does not block the downward unrolling path of the projection screen body 11, the projection screen body 11 meets a condition for being unrolled downward. However, sometimes, some objects, such as clothes, are placed on the backrest 117a of the front-row seat 117. Although the backrest 117a does not block the downward unrolling path of the projection screen body 11, the objects, such as clothes, may block the downward unrolling path of the projection screen body 11, which also causes interference with the projection screen body 11. When interference occurs in a downward unrolling process of the projection screen body 11, the motor 121 that drives the projection screen body 11 to unroll may sense a current change, and control the projection screen body 11 to stop further unrolling. This prevents the projection screen body 11 from developing interference-induced creasing or being crushed.

In addition, in a state in which the projection screen body 11 is open, the posture of the front-row seat 117 may also be determined by using the Hall sensor or the position sensor, and sliding backward of the front-row seat 117 and the angle of the backrest 117a can be limited, to avoid interference with the projection screen body 11 in use in a seat adjustment process.

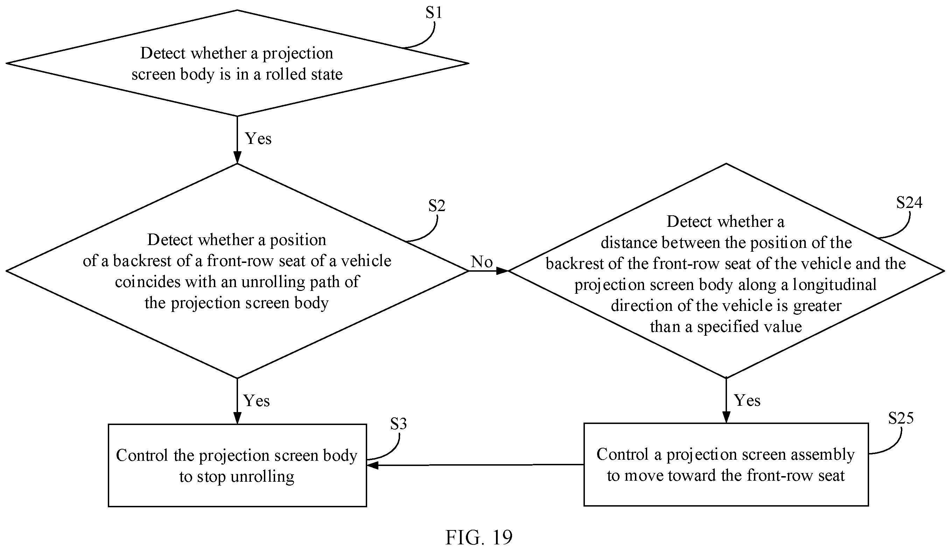

Specifically, as shown in FIG. 19, if a detection result of step 2 is no, the control method further includes the following steps.

Step S24: Detect whether a distance between the position of the backrest 117a of the front-row seat 117 of the vehicle 100 and the projection screen body 11 along the longitudinal direction Y of the vehicle 100 is greater than a specified value, and if yes, perform step S25.

Step S25: Control the projection screen assembly 1 to move toward the front-row seat 117.

The specified value may be a specific value ranging from 10 mm to 20 mm. When the distance between the position of the backrest 117a of the front-row seat 117 of the vehicle 100 and the projection screen body 11 along the longitudinal direction Y of the vehicle 100 is greater than 10 mm to 20 mm, the projection screen assembly 1 may have specific adjustment space in a direction toward the front-row seat 117, so that the projection screen assembly 1 can be further away from a passenger in the rear row. This improves video watching experience. However, when the distance between the position of the backrest 117a of the front-row seat 117 of the vehicle 100 and the projection screen body 11 along the longitudinal direction Y of the vehicle 100 is less than 10 mm to 20 mm, video watching effect is not obviously improved after the projection screen assembly 1 is adjusted forward, and therefore no adjustment is required.

The foregoing descriptions are merely preferred embodiments of this application, and are not intended to limit this application. For a person skilled in the art, this application may have various modifications and variations. Any modification, equivalent replacement, or improvement made without departing from the spirit and principle of this application shall fall within the protection scope of this application.

## Claims

1. A projection screen assembly, wherein the projection screen assembly is disposed in a vehicle ceiling, and the projection screen assembly comprises:
a first connection structure, wherein the projection screen assembly is connected to a vehicle body sheet metal in the vehicle ceiling through the first connection structure;
a first driving mechanism; and
a projection screen body, wherein the projection screen body is connected to the first driving mechanism, and a projection screen rolls up into or extends out of the vehicle ceiling through driving of the first driving mechanism.

2. The projection screen assembly according to claim 1, wherein the projection screen assembly further comprises a first housing, the first housing is disposed in the vehicle ceiling, the first housing is connected to the vehicle body sheet metal through the first connection structure, and the first driving mechanism is disposed in the first housing; and
the first housing is provided with a first hole, and the projection screen body rolls up into or extends out of the first housing through the first hole.

3. The projection screen assembly according to claim 2, wherein the projection screen assembly further comprises a decorative plate, the decorative plate is connected to the bottom of the projection screen body, and the decorative plate is configured to seal the first hole in a state in which the projection screen body is accommodated in the first housing.

4. The projection screen assembly according to claim 2 or 3, wherein the projection screen body further comprises a retractable bracket, one end of the retractable bracket is disposed on the first housing, the other end of the retractable bracket is connected to the projection screen body, and the other end of the retractable bracket is accommodated in or extends out of the first housing as the projection screen body moves.

5. The projection screen assembly according to any one of claims 2 to 4, wherein the first housing is fastened to the vehicle body sheet metal through the first connection structure.

6. The projection screen assembly according to any one of claims 1 to 5, wherein the first connection structure is an adapter bracket.

7. The projection screen assembly according to any one of claims 2 to 5, wherein the first connection structure is a connection hole provided on the first housing.

8. The projection screen assembly according to any one of claims 1 to 7, wherein the first driving mechanism comprises a motor and a reel, and the motor is connected to the reel, and is configured to drive the reel to rotate; and
one end of the projection screen body is connected to the reel.

9. The projection screen assembly according to claim 1, wherein the projection screen assembly is slidably connected to the vehicle body sheet metal along a longitudinal direction of a vehicle through the first connection structure.

10. The projection screen assembly according to claim 9, wherein the projection screen assembly comprises a second housing, the first driving mechanism is disposed in the second housing, and the projection screen body rolls up into or extends out of the second housing;
the first connection structure comprises a sliding rail, a slider, and a second driving mechanism;
the sliding rail is connected to the vehicle body sheet metal, the slider is connected to the second housing, and the second housing is slidably connected to the sliding rail through the slider; and
the second driving mechanism is connected to the second housing, and is configured to drive the second housing to move along the sliding rail.

11. An optical engine assembly, comprising:
a second connection structure;
an optical engine body, wherein the optical engine body is disposed in a vehicle ceiling, and the optical engine body is connected to a vehicle body sheet metal in the vehicle ceiling through the second connection structure; and
a lens, wherein the lens is connected to the optical engine body, the lens extends out of an interior trim member of the vehicle ceiling, and the lens is configured to project light onto a projection screen body in the projection screen assembly according to any one of claims 1 to 10.

12. The optical engine assembly according to claim 11, wherein the lens is disposed at the bottom of the optical engine body along a thickness direction of the vehicle ceiling.

13. The optical engine assembly according to claim 11, wherein the lens is disposed, along a longitudinal direction of a vehicle, at an end that is of the optical engine body and that faces the projection screen assembly.

14. The optical engine assembly according to claim 12, wherein the optical engine body comprises a light emitting module, an air inlet channel, and an air outlet channel, and the lens is connected to the light emitting module; and
the air inlet channel and the air outlet channel are respectively disposed on two opposite sides of the light emitting module along a direction perpendicular to the thickness direction of the vehicle ceiling.

15. The optical engine assembly according to claim 14, wherein the optical engine body further comprises a housing, the light emitting module is disposed in the housing, and the air inlet channel and the air outlet channel are respectively formed on the two sides of the light emitting module in the housing.

16. The optical engine assembly according to claim 15, wherein the housing is provided with an air inlet and an air outlet, the air inlet communicates with the air inlet channel, and the air outlet communicates with the air outlet channel; and
along the thickness direction of the vehicle ceiling, opening directions of the air inlet and the air outlet both face an inner side of the vehicle ceiling.

17. The optical engine assembly according to any one of claims 14 to 16, wherein the optical engine assembly further comprises a fan, and the fan is disposed in the air inlet channel.

18. The optical engine assembly according to any one of claims 11 to 17, wherein the second connection structure is an adapter bracket.

19. The optical engine assembly according to any one of claims 15 to 17, wherein the second connection structure is a connection hole provided on the housing.

20. A projection system, comprising the projection screen assembly according to any one of claims 1 to 10 and the optical engine assembly according to any one of claims 11 to 19, wherein the optical engine assembly projects light onto a projection screen body in the projection screen assembly through a lens.

21. A vehicle, comprising the projection system according to claim 20, wherein the vehicle further comprises a vehicle ceiling, the vehicle ceiling comprises a vehicle body sheet metal and an interior trim member, accommodation space is formed between the interior trim member and the vehicle body sheet metal, and at least a part of the projection apparatus is disposed in the accommodation space.

22. The vehicle according to claim 21, wherein a projection screen assembly is fastened to the vehicle body sheet metal.

23. The vehicle according to claim 21, wherein the vehicle body sheet metal comprises a first lateral beam and a second lateral beam, the first lateral beam is located in the middle of the vehicle ceiling, and a projection screen assembly is connected to the first lateral beam; and
the second lateral beam is located at a tail of the vehicle ceiling, and an optical engine assembly is fastened to the second lateral beam.

24. The vehicle according to claim 21, wherein the vehicle further comprises a sunroof shade bracket and a sunroof shade, the sunroof shade bracket is connected to the vehicle body sheet metal, a first sliding part is disposed on the sunroof shade bracket, and the sunroof shade is slidably connected to the sunroof shade bracket through the first sliding part; and
a projection screen assembly is slidably connected to the vehicle body sheet metal, and the projection screen assembly is located below the sunroof shade.

25. The vehicle according to claim 24, wherein a second sliding part is disposed on the sunroof shade bracket, and the projection screen assembly is slidably connected to the sunroof shade bracket through the second sliding part.

26. The vehicle according to claim 21, wherein a second hole is provided on the interior trim member, a decorative plate is disposed on a projection screen body, and the decorative plate is configured to seal the second hole in a state in which the projection screen body is accommodated in the accommodation space.

27. A control method, used to control a projection screen body in the projection screen assembly according to any one of claims 1 to 10 to be rolled or unrolled, wherein the control method comprises:
detecting whether the projection screen body is in a rolled state;
if yes, detecting whether a position of a backrest of a front-row seat of a vehicle coincides with an unrolling path of the projection screen body; and
if yes, controlling the projection screen body to stop unrolling.

28. The control method according to claim 27, wherein the detecting whether a position of a backrest of a front-row seat of a vehicle coincides with an unrolling path of the projection screen body specifically comprises:
obtaining the position of the backrest based on a displacement of the front-row seat and an angle of the backrest; and
determining whether a position of the projection screen body coincides with the position of the backrest along an unrolling direction of the projection screen body.

29. The control method according to claim 27, wherein if a result of the detecting whether a position of a backrest of a front-row seat of a vehicle coincides with an unrolling path of the projection screen body is no, the control method further comprises:
detecting whether the projection screen body interferes with an object in an unrolling process; and
if yes, controlling the projection screen body to stop unrolling.

30. The control method according to claim 27, wherein if a result of the detecting whether a position of a backrest of a front-row seat of a vehicle coincides with an unrolling path of the projection screen body is no, the control method further comprises:
detecting whether a distance between the position of the backrest of the front-row seat of the vehicle and the projection screen body along a longitudinal direction of the vehicle is greater than a specified value; and
if yes, controlling the projection screen assembly to move toward the front-row seat.
